# EUROPÄISCHE PATENTANMELDUNG

(11) **EP 1 237 029 A2**
(43) Veröffentlichungstag der Anmeldung: **04.09.2002**
(21) Anmeldenummer: 02003621.6
(22) Anmeldetag: 16.02.2002
(51) Int. Cl.: G02B 21/08

(54) **Verfahren zur Justierung einer Lampe relativ zu einem Beleuchtungsstrahlengang eines Mikroskopes und zur Ausführung des Verfahrens geeignetes Mikroskop**

(30) Priorität: 03.03.2001 DE 10110389
(71) Anmelder: CARL ZEISS SEMICONDUCTOR MANUFACTURING TECHNOLOGIES AG, 73447 Oberkochen (DE)
(72) Erfinder: Ott, Peter, Dr., 74348 Lauffen am Neckar (DE)

(57) **Zusammenfassung**

Die Erfmdung betrifft ein Verfahren zur automatischen Lampenjustierung bei einem Mikroskop ohne Strahlhomogenisierer im Beleuchtungsstrahlengang und ein für die Anwendung des Verfahrens ausgerüstetes Mikroskop. Gemäß der Erfindung wird die Lichtleistung im Beleuchtungsstrahlengang hinter der Pupillenebene des Mikroskopobjektivs oder hinter der Pupillenebene des Beleuchtungsstrahlenganges mit einem Detektor integral gemessen und die Lampe relativ zum Beleuchtungsstrahlengang so justiert, daß die mit dem Detektor detektierte Lichtleistung maximal ist. Bei einem Mikroskop, das zu einer automatisierten Lampenjustierung beispielsweise nach einem Lampenwechsel gernäß dem erfindungsgemäßen Verfahren geeignet ist, sind zur Justierung der Lampe motorische Antriebe vorgesehen, die von einem Auswerte- und Steuerrechner nacheinander so lange angesteuert werden, bis mit einem Detektor maximale Lichtleistung detektiert wird.

## Beschreibung

Die vorliegende Erfindung betrifft ein Verfahren zur Justierung einer Lampe relativ zu einem Beleuchtungsstrahlengang eines Mikroskopes ohne Strahlhomogenisierer und ein zur Ausführung des Verfahrens geeignetes Mikroskop.

Die Justierung von Lampen in Mikroskopbeleuchtungen, sowohl bei der Erstjustage des Mikroskopes als auch nach einem Lampenwechsel, erfolgt üblicherweise nach klassischen Justagekriterien, die eine homogene Ausleuchtung des Objektfeldes gewährleisten. Ein erstes Justagekriterium ist dabei eine scharfe Abbildung der Lichtquelle, also des Lampenbogens oder der Lampenwändel, in die Pupille des Objektivs. Dieses Justagekriterium kann mit Hilfe einer sogenannten Bertrandlinse, die die Objektivpupille in das Sehfeld des Mikroskopes abbildet, überprüft werden. Anstelle einer visuellen Kontrolle der scharfen Abbildung kann in der Bildebene der Betrandlinse auch eine CCD-Kamera angeordnet sein, deren Bild auf eine scharfe Abbildung ausgewertet wird. Als zweites Kriterium kann die Ausleuchtung im Objektfeld selbst auf Homogenität überprüft und gegebenenfalls die Lampe auf maximale Homogenität nachjustiert werden. Das Ziel der Lampenjustierung ist dabei immer eine weitgehend homogene Ausleuchtung im Objektfeld sicher zu stellen.

Diese klassischen Verfahren zur Lampenjustierung sind für eine Automatisierung sowohl bei der Erstmontage als auch nach einem Lampenwechsel derart, daß das Mikroskop eine homogene Ausleuchtung des Objektfeldes ohne manuellen Eingriff gewährleistet, wegen ihrer Komplexität nur begrenzt geeignet. Andererseits zeigen Erfahrungen, daß insbesondere Routineanwender von Mikroskopen mit einer Lampenjustierung nach den klassischen Justierkriterien häufig überfordert sind.

In Beleuchtungseinrichtungen für Mikrolithographiegeräte werden Strahlhomogenisierer eingesetzt, die eine homogene Ausleuchtung der abzubildenden Maske sicherstellen. Zusätzlich wird die Position der Lichtquelle relativ zum Beleuchtungsstrahlengang auf maximale Lichtleistung des Strahlhomogenisierers justiert, damit die von der Lichtquelle emittierte Lichtleistung optimal ausgenutzt wird.

Es wäre nun denkbar, auch bei Mikroskopbeleuchtungen Strahlhomogenisierer, beispielsweise in Form von sogenannten Fly-Eye-Lenses oder Glasstäben zur Lichtmischung einzusetzen. Eine homogene Ausleuchtung des Objektfeldes würde dadurch unabhängig von der Positionierung der Lampe relativ zum Beleuchtungsstrahlengang gewährleistet werden, so daß auf eine Lampenjustierung vollständig verzichtet werden könnte. Der Einsatz solcher Strahlhomogenisierer würde jedoch bei Mikroskopen zu einem nicht durchsetzbaren Mehraufwand führen.

Es ist demzufolge das Ziel der vorliegenden Erfindung, ein einfaches Verfahren zur Lampenjustierung bei Mikroskopen anzugeben, das eine homogene Ausleuchtung des auszuleuchtenden Objektfeldes sicherstellt und für eine Automatisierung gut geeignet ist. Ein weiteres Ziel der Erfindung ist es ein Mikroskop anzugeben, das unter Ausnutzung des erfindungsgemäßen Verfahrens geeignet ist, eine Justierung der Lampe automatisiert herbeizuführen, die eine homogene Ausleuchtung des Objektfeldes sicherstellt.

Dieses Ziel wird durch ein Verfahren zur Justierung einer Lampe entsprechend dem Anspruch 1 und ein Mikroskop mit den Merkmalen des Anspruches 5 gelöst. Vorteilhafte Ausgestaltungen der Erfindung ergeben sich aus den Merkmalen der abhängigen Ansprüche.

Die Erfindung basiert auf der Erkenntnis, daß auch bei Beleuchtungsstrahlengängen ohne Strahlhomogenisierer eine homogene Ausleuchtung des Leuchtfeldes gewährleistet ist, wenn die flächenmäßig integrale Lichtleistung hinter der Pupillenebene des Mikroskopobjektivs oder hinter der Pupillenebene des Beleuchtungsstrahlenganges - bei ansonsten konstanten Betriebsbedingungen der Lampe - maximal ist. Dementsprechend wird beim erfindungsgemäßen Verfahren die flächenmäßig integrale Lichtleistung hinter der Pupillenebene des Mikroskopobjektivs oder hinter der Pupillenebene des Beleuchtungsstrahlenganges mit einem Detektor gemessen und der Lampenkörper relativ zum Beleuchtungsstrahlengang so justiert, daß die mit dem Detektor detektierte integrale Lichtleistung maximal ist. Wichtig ist dabei, daß die integrale Detektion der Lichtleistung erst nach Durchtritt durch die den Lichtstrom begrenzende Blende erfolgt.

Aufgrund der Erkenntnis der Erfindung liegt somit ein einfaches Justagekriterium vor, das sich hervorragend zur automatisierten Justierung der Lampe nach einem Lampenwechsel oder zur automatisierten Justierung der Lampe bei der Erstjustierung eignet. Die Justierung der Lampe kann demzufolge vorzugsweise motorisch softwaregesteuert erfolgen. Die erfindungsgemäße Erkenntnis ist jedoch auch vorteilhaft bei manueller Justierung der Lampe einsetzbar, da das Justagekriterium einer maximalen integralen Lichtleistung auch von ungeübten Bedienern wesentlich einfacher überprüfbar und verfolgbar ist als das übliche Justagekriterium einer scharfen Abbildung des Lampenbogens in die Objektivpupille mittels einer Bertrandlinse.

Ein für eine automatische Lampenjustierung geeignetes Mikroskop weist vorzugsweise im Beleuchtungsstrahlengang ohne Strahlhomogenisierer motorische Antriebe zur Justierung der Lampe relativ zum Beleuchtungsstrahlengang, sowie einen Auswerte- und Steuerrechner auf. Der Auswerte- und Steuerrechner steuert dabei die motorischen Antriebe zur Lampenjustierung derart nacheinander an, bis mit einem hinter der Pupillenebene des Beleuchtungsstrahlenganges oder des Mikroskopobjektivs angeordneten Detektor ein Maximum der integralen Lichtleistung gemessen wird.

Der Detektor zur Erfassung der Lichtleistung kann im Beleuchtungsstrahlengang integriert vorgesehen sein. In diesem Fall ist es vorteilhaft, wenn am Objekttisch des Mikroskopes ein reflektierender Bereich vorgesehen ist und der Detektor das am reflektierenden Bereich reflektierte Licht detektiert. Alternativ kann auch eine Auspiegelung eines Teils des Beleuchtungslichtes auf einen Detektor vorgesehen sein.

Weiterhin ist es möglich, den Detektor zur Erfassung der Lichtleistung mehr oder minder offen am Objekttisch des Mikroskopes vorzusehen. Diese Ausführungsform eignet sich besonders zur Nachrüstung bereits existierender Mikroskope sowie zum Einsatz der Erfindung innerhalb bereits existierender Mikroskopserien.

Als Detektor kann eine einzelne Diode, eine Vierquadrantendiode oder auch eine CCD-Kamera zum Einsatz kommen. Im Falle einer Quadrantendiode öder eines CCD-Sensors wird die mit den einzelnen Sensorteilen bzw. Sensorregionen detektierte Lichtleistung am Detektorausgang flächenmäßig integriert. Der Einsatz eines CCD-Sensors bzw. einer CCD-Kamera kommt natürlich insbesondere dann in Betracht, wenn, wie z.B. bei Auflichtmikroskopen, ohnehin eine CCD-Kamera zur Bilddokumentation vorgesehen ist.

Zur Anwendung der Erfindung kann entweder die Lampe in drei zueinander orthogonalen Raumrichtungen relativ zum Beleuchtungsstrahlengang justierbar sein, oder es ist auch möglich, daß die Lampe nur in zwei zueinander senkrechten Raumrichtungen justiert wird und eine im Strahlengang angeordnete Kollektoroptik entlang der optischen Achse des übrigen Beleuchtungsstrahlenganges verschiebbar ist.

Zum Auffinden der maximalen Lichtleistung kann vorzugsweise ein Gradientenverfahren angewendet werden. Bei einem solchen Gradientenverfahren wird, ausgehend von einer Ausgangsstellung, der maximale Gradient der Lichtleistung in Abhängigkeit von einer Positionsveränderung der Lampe relativ zum Beleuchtungsstrahlengang und/oder der Lampe und der Kollektoroptik relativ zum Beleuchtungsstrahlengang ermittelt und nachfolgend die Lampe und/oder die Kollektoroptik im Beleuchtungsstrahlengang in Richtung des maximalen Gradienten der Lichtleistung verstellt.

Nachfolgend werden Einzelheiten der Erfindung anhand des in den Figuren dargestellten Ausführungsbeispiels näher erläutert. Im einzelnen zeigen:
- Figur 1: ein Auflichtmikroskop mit einem im Objektüsch integrierten Detektor im Schnitt;
- Figur 2: ein Flußdiagramm der bei einem Mikroskop mit automatisierten Lampenjustierung ablaufenden Prozeßschritte;
- Figur 3: ein Flußdiagramm der beim Gradientenverfahren zum Auffinden der maximalen Lichtleistung ablaufenden Prozeßschritte;
- Figur 4: ein Mikroskop mit einem im Beleuchtungsstrahlengang integrierten Detektor im Schnitt.

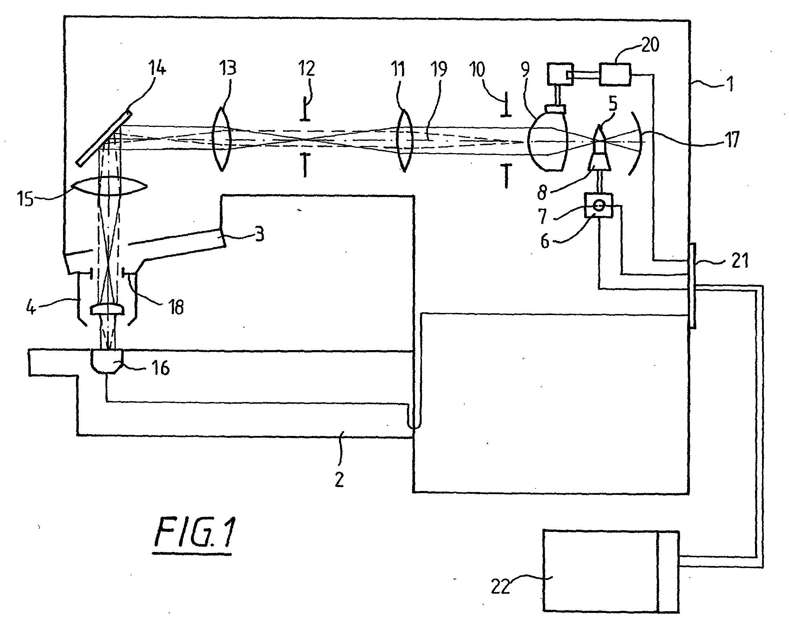

In der Figur 1 ist der Oberteil des Mikroskopstativs mit dem darin aufgenommenen Beleuchtungsstrahlengang mit dem Bezugszeichen (1) versehen. An dem Mikroskop ist in bekannter Weise ein Objekttisch (2) zur Fokussierung höhenverstellbar aufgenommen. Weiterhin weist das Mikroskop in bekannter Weise einen Objektivrevolver (3) mit daran aufgenommenen Objektiven (4) auf, von denen in der Figur (1) nur eines dargestellt ist.

Der Auflichtbeleuchtungsstrahlengang beim Mikroskop in Figur 1 weist im Prinzip die für die Einstellung Köhlerscher Beleuchtungsbedingungen üblichen Komponenten auf. Als Lichtquelle kann eine Halogenlampe oder eine Gasentladungslampe (5) vorgesehen sein. Das von der Lampe (5) emittierte Licht wird von einer Kollektoroptik (9) und gegebenenfalls in Verbindung mit einem Kollektorspiegel (17), der das rückwärtig ausgestrahlte Licht aufsammelt und in die Lampe (5) zurück reflektiert, kollimiert. Im Bereich des kollimierten Strahlenganges ist eine bezüglich ihres Öffnungsdurchmessers einstellbare Feldblende (10) vorgesehen, die konjugiert zur Brennebene des Mikroskopobjektivs (4) angeordnet ist. Eine der Feldblende (10) nachgeordnete Linse (11) bildet die Feldblende (10) nach unendlich ab. In der Brennebene der Linse (11) ist eine zweite bezüglich ihres Öffnungsdurchmessers einstellbare Blende (12) zur Einstellung der Beleuchtungsapertur vorgesehen. Diese Aperturblende (12) wird durch eine nachfolgende Linse (13) nach unendlich abgebildet und nach Einspiegelung in den Beobachtungsstrahlengang über einen Strahlteiler (14) durch die Tubuslinse (15) im gemeinsamen Teil des Beleuchtungs- und Beobachtungsstrahlenganges in die Austrittspupille (18) des Mikroskopobjektivs (4) abgebildet.

Im Objekttisch (2) des Mikroskopes ist als Detektor eine großflächige Diode (16) integriert, mit der die gesamte vom Mikroskopobjektiv (4) fokussierte Lichtintensität detektiert wird. Diese Diode (16) kann als einfache großflächige Diode ausgebildet sein. Besonders vorteilhaft ist es jedoch, die Diode (16) als Vierquadrantendiode auszubilden. Im letzteren Fall kann damit diese Diode (16) gleichzeitig auch zur Kalibrierung des Objekttisches dienen, in dem der Mittelpunkt des durch die Vierquadrantendiode gebildeten Achsenkreuzes als Referenzpunkt, z.B. Nullpunkt, für die X/Y-Verstellung des Objekttisches verwendet wird.

Der Durchmesser der lichtempfindliche Fläche der Diode (16) (bei einer Quadrantendiode der Durchmesser der vier Quadranten gemeinsam) ist dabei mindestens so groß wie der Durchmesser des in der Brennebene des Objektivs (4) ausgeleuchteten Feldes.

Zur Realisierung einer automatisierten Lampenjustierung ist die Fassung (8) der Lampe (5) über zwei motorische Antriebe (6, 7) in den beiden Richtungen senkrecht zur optischen Achse (19) des Beleuchtungsstrahlenganges justierbar. Über einen weiteren motorischen Antrieb (20) ist die Kollektorlinse (9) in Richtung der optischen Achse (19) verschiebbar. Alternativ zu einer Verschiebung sowohl der Lampe (5) als auch der Kollektorlinse (9) kann auch die Lampe (5) über drei entsprechende Antriebe in den drei zueinander senkrechten Raumrichtungen verschiebbar sein, wofür dann allerdings eine entsprechend aufwendigere Mechanik erforderlich ist, da die Freiheitsgrade für eine voneinander unabhängige Verstellung in drei zueinander senkrechten Raumrichtungen erforderlich wären.

Die Justierantriebe (6, 7) der Lampe (5) und der Justierantrieb (20) der Kollektorlinse (9) sind über eine Schnittstelle (21) von einem Steuerrechner (22) ansteuerbar. Über die selbe Schnittstelle (21) werden auch die Ausgangssignale der Diode (16) dem Steuerrechner (22) zugeführt.

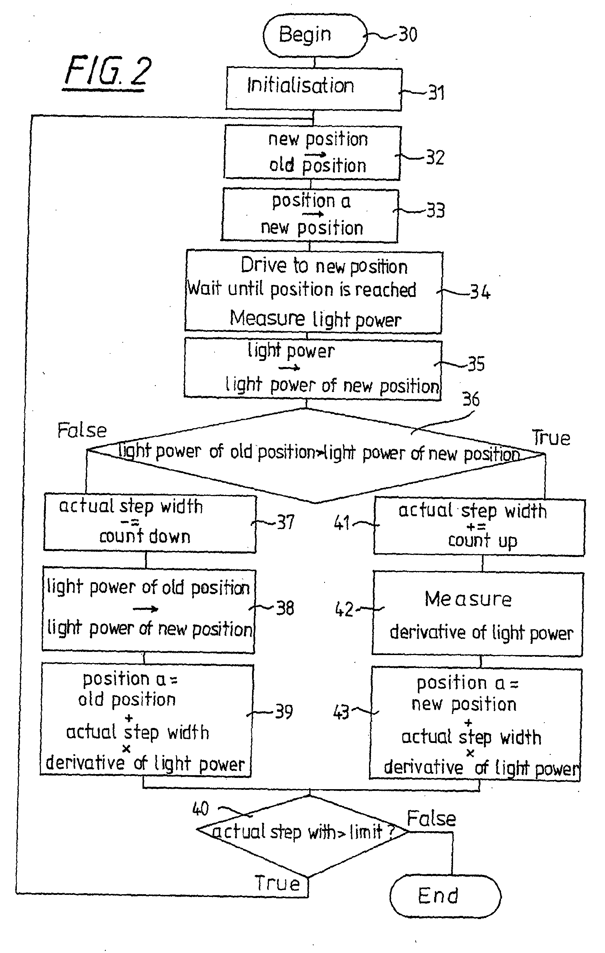

Die bei einer automatischen Lampenjustierung ablaufenden Verfahrensschritte werden nachfolgend anhand der Figur 2 näher erläutert. Der Justierungsprozeß beginnt mit. einem Startschritt (30) der beispielsweise dadurch ausgelöst wird, daß der Benutzer über eine Bedienungsoberfläche einen erfolgten Lampenwechsel bestätigt. In einem nachfolgenden Initialisierungsschritt (31) wird der Objekttisch (2) sowohl in Richtung der optischen Achse des Mikroskopobjektivs (4) als auch in den beiden Richtungen senkrecht dazu so verfahren, daß die Diode (16) unterhalb des Mikroskopobjektivs (4) positioniert ist und demzufolge die gesamte vom Mikroskopobjektiv (4) gesammelte Lichtleistung detektiert. Soweit das Mikroskop einen motorischen Fokussierantrieb und einen motorischen X/Y-Tisch aufweist, kann diese Initialisierung natürlich auch automatisiert erfolgen. In diesem Fall steuert der Steuer- und Auswerterechner (22) die motorischen Antriebe für die Fokussierung und die Lateralposition des Objekttisches entsprechend an. Soweit keine motorischen Antriebe für die Fokussierung und den X/Y-Tisch vorgesehen sind, erhält der Benutzer über die Bedienoberfläche den Auftrag, den Objekttisch entsprechend so zu verstellen, daß die Diode (16) unmittelbar unter dem Objektiv (4) positioniert ist.

In zwei nachfolgenden Schritten (32, 33) erfolgt eine Variablenzuordnung, bei der einer Variable "old position" der Wert einer Variable "new position" und der Variable "new position" der Wert einer Variable "position a" zugeordnet wird. Für den erstmaligen Durchlauf des Prozesses werden für diese Variablen im Initialisierungsschritt (31) fest vorgegebene Werte eingesetzt. In einem nachfolgenden Schritt (34) werden die Antriebe (6, 7) der Lampe und (20) der Kollektorlinse derart angesteuert, daß die Antriebe die Werte der Variablen "new position" annehmen. Anschließend erfolgt eine Messung der Lichtleistung mit der Diode (16) und ein Auslesen der gemessenen Lichtleistung sowie nachfolgend in einem Schritt (35) eine weitere Variablenzuordnung, in der der Wert der gemessenen Lichtleistung einer Variablen "light power of new position" zugeordnet wird. In einem nachfolgenden Schritt (36) erfolgt eine Entscheidungsabfrage, ob der Wert der Variablen "light power of old position" der ebenfalls im Initialisierungsschritt ein Wert zugeordnet wurde, kleiner als der Wert der Variablen "light power of new position" ist. Falls diese Frage negativ zu beantworten ist, wird in einem Schritt (37) einer Variable "actual step with" der Wert einer Variable "countdown" und in einem nachfolgenden Schritt (38) der Variable "light power of new position" der Wert der Variablen "light power of old position" zugeordnet. In einem nachfolgenden Schritt (39) wird der Wert einer Variablen "position a" berechnet und zwar als Summe der Variablen "old position" und dem Produkt aus dem Wert der Variablen "actual step with" und der Variablen "derivative of light power". In einem nachfolgenden Entscheidungsschritt (40) wird überprüft, ob der Wert der Variablen "actual step with" größer als ein vorgegebener Grenzwert ist. Ist diese Abfrage zu bejahen, springt die Routine mit den neuen Werten zum obigen Schritt (32) zurück, so daß die nachfolgenden Schritte erneut durchgelaufen werden. Ist hingegen die Abfrage im Schritt (40) mit falsch zu beantworten, ist das Ende der Routine erreicht.

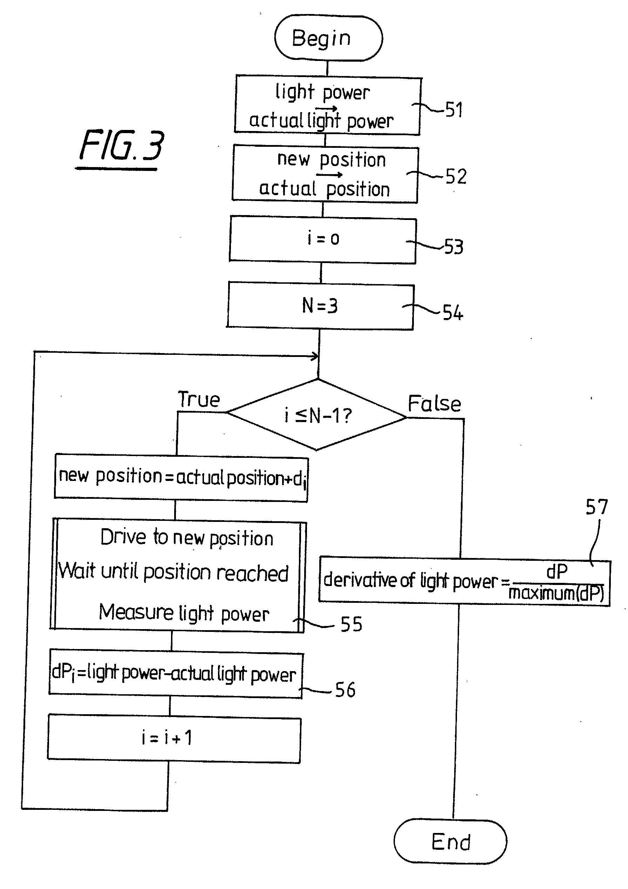

Ist im oben beschriebenen Schritt (36) die Abfrage, ob der Wert der Variablen "ligth power of old position" kleiner oder gleich dem Wert der Variablen "light power of new position" ist, zu bejahen, wird in einem Schritt (41) der Variablen "actual step with" der Wert einer Variablen "count up" zugeordnet und nachfolgend in einem Schritt (42) der Gradient der Lichtleistung gemessen. Die Einzelheiten hinsichtlich der Messung des Gradienten der Lichtleistung werden nachfolgend anhand des Ablaufdiagrammes in Figur 3 näher beschrieben. Im Anschluß an die Messung des Gradienten der Lichtleistung wird der Variablen "derivative of light power" der Wert des gemessenen Gradienten zugeordnet und anschließend in einem Schritt (43) der Variablen "position a" der Wert aus der Summe der Variablen "new position" und dem Produkt aus den Variablen "actual step with" und "derivative of light power" zugeordnet. Im Anschluß daran gelangt auch über diesen Zweig die Routine zu der Abfrage (40), ob der Wert der Variablen "actual step with" größer als ein Grenzwert ist, und im Falle, daß diese Frage zu verneinen ist, ans Ende der Routine und im Falle, daß diese Frage zu bejahen ist, geht auch in diesem Fall die Routine zum Schritt (32) hinter dem Initialisierungsschritt (31) zurück.

Ein Verfahren zur Bestimmung des Gradienten der Lichtleistung wird nachfolgend anhand der Figur 3 näher erläutert. In zwei ersten Zuordnungsschritten wird der Variablen "actual light power" der Wert der Variablen "light power" zugeordnet und der Variablen "actual position" der Wert der Variablen "new position". Die Werte dieser Variablen sind entweder aus den zuvor abgelaufenen Schritten gemäß Figur 2 bekannt oder werden im Initialisierungsschritt (31) gemäß Figur (2) festgelegt. In zwei weiteren Initialisierungsschritten (53, 54) werden die Werte der Indexvariablen (i) und (N) festgelegt. Im Anschluß daran wird sequentiell jeder einzelne Antrieb (6, 7) der Lampe bzw. (20) der Kollektorlinse um eine vorgegebene Schrittweite dᵢ verschoben und jeweils die auf die Diode (16) einfallende Lichtleistung in einem Schritt (55) gemessen. In einem nachfolgenden Schritt (56) wird die Änderung der Lichtleistung gemessen, also die Differenz der Variablen "light power" und der Variablen "actual light power" berechnet. Diese Schritte werden für alle drei Antriebe separat und nacheinander durchgeführt. Nachdem die Differenzwerte der Lichtleistung für die Ansteuerung aller drei Antriebe vorliegen, wird in einem Schritt (37) der Gradient der Lichtleistung, also ein Wert der Variablen "derivative of light power" als vektorielle Größe berechnet. Der so berechnete Wert der vektoriellen Größe "derivative of light power" wird nachfolgend in den Schritten (39) und (43) zur Berechnung der neu anzusteuernden Position "position a" verwendet.

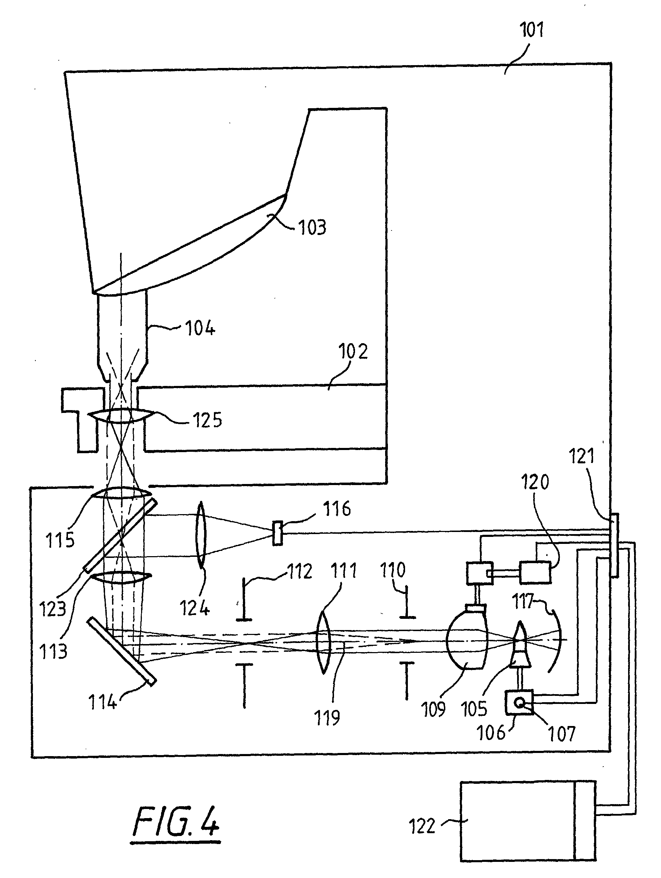

In der Figur 4 ist ein erfindungsgemäßes Mikroskop mit einer Durchlichtbeleuchtung dargestellt. Diejenigen Komponenten, die beim Ausführungsbeispiel in Figur 4 den Komponenten beim Ausführungsbeispiel in Figur 1 entsprechen, sind mit um jeweils 100 größeren Bezugszeichen versehen. Das von einer Lampe (105) emittierte Licht wird von einer Kollektorlinse (109) und einem Kollektorspiegel (117) kollimiert. Auf die Kollektorlinse (109) folgt eine bezüglich ihres Öffnungsdurchmessers variierbare Blende (110), die bezüglich der nachfolgenden Optik konjugiert zur Brennebene des Objektivs (104) angeordnet ist und zur Einstellung des ausgeleuchteten Feldes dient. Eine der Feldblende (110) nachfolgende Linse (111) erzeugt in der Ebene einer Aperturblende (112) ein Bild der Lichtquelle der Lampe (105). Gleichzeitig bildet die Linse (111) die Feldblende (110) nach unendlich ab. Hinter einem Umlenkspiegel (114) folgen zwei weitere Linsen (113, 115), die gemeinsam einerseits die Ebene der Aperturblende (112) in die hintere Brennebene des im Objekttisch (102) integrierten Durchlichtkondensors (125) abbilden und gleichzeitig die Feldblende (110) nach unendlich abbilden. Durch Einstellung der Öffnungsdurchmesser der Feldblende (110) und der Aperturblende (112) läßt sich auch bei diesem Ausführungsbeispiel in bekannter Weise eine sogenannte Köhlersche Beleuchtung einstellen.

Zur Erfassung der integralen Lichtleistung innerhalb des Beleuchtungsstrahlenganges ist hinter der Aperturblende (112) ein teildurchlässiger Spiegel (123) angeordnet, durch den ein kleiner Teil des Beleuchtungslichtes ausgekoppelt und über eine nachfolgende Linse (124) auf eine im Mikroskopfuß integrierte Diode (116) fokussiert wird.

Auch bei diesem Ausführungsbeispiel ist die Lampe (105) in zwei zueinander senkrechten Richtungen senkrecht zur optischen Achse (119) motorisch verstellbar, wofür die motorischen Antriebe (106,107) vorgesehen sind. Weiterhin ist auch bei diesem Ausführungsbeispiel die Kollektorlinse (109) über einen motorischen Antrieb (120) in Richtung der optischen Achse (119) zur Justierung der Beleuchtung verstellbar. Die Ansteuerung der Antriebsmotoren (106, 107) zur Justierung der Lampe (105) und des Antriebes (120) für die achsiale Verschiebung der Kollektorlinse (109) erfolgt wiederum über einen Steuerungsrechner (122), sowie eine am Mikroskopstativ vorgesehene Schnittstelle (121), über die auch das Ausgangssignal der Diode (116) dem Steuerungsrechner (122) zugeführt ist.

Beim Ausführungsbeispiel nach Figur 4 mit im Beleuchtungsstrahlengang integrierter Diode (116) ist für die Justierung der Lampe (105) nach dem oben anhand der Figuren 2 und 3 beschriebenen Verfahren von Bedeutung, daß die Lage der Aperturblende (112) zur Lage der Eintrittspupille des Kondensors (125) konjugiert ist und bezüglich ihres Öffnungsdurchmessers unter Berücksichtigung der durch die zwei Linsen (113, 115) bewirkten Vergrößerung bzw. Verkleinerung dem Pupillendurchmesser des Kondensors (125) entspricht. Derartige Anforderungen bestehen beim Ausführungsbeispiel nach Figur 1 nicht, jedoch ist es dort erforderlich, daß der Durchmesser des lichtempfindlichen Bereiches der Diode (116) größer oder gleich dem Durchmesser des vom Objektiv (4) ausgeleuchteten Leuchtfeldes ist.

Das oben beschriebene erfindungsgemäße Verfahren kann natürlich nicht nur zur Justierung der Lampe (5, 105) relativ zum Beleuchtungsstrahlengang eingesetzt werden, sondern bei der Erstjustierung auch zur Justierung des Kollektorspiegels (17, 117) relativ zum Kollektor (9, 109). Dazu kann abwechselnd die Lampe und der Hohlspiegel iterativ auf maximale Leistung an der Diode (16, 116) justiert werden. Nach einer groben Voreinstellung des Kollektorspiegels werden ca. 3 bis 4 Iterationen benötigt, um eine optimale Einstellung zu erreichen. Danach wird bei einem Lampenwechsel nur noch die Lampe senkrecht zur optischen Achse und die Kollektorlinse (9, 109) in Richtung der optischen Achse justiert. Eine Justierung des Kollektorspiegels (17, 117) ist später bei einem Lampenwechsel nicht erforderlich.

Das erfindungsgemäße Verfahren wurde oben anhand des Gradientenverfahrens zur Ermittlung der Position der Lampe mit maximaler Lichtleistung beschrieben. Das Gradientenverfahren liefert dabei den Vorteil, daß es einerseits relativ einfach implementierbar ist und andererseits mit relativ wenigen Iterationsschritten zu einer optimalen Justierung führt. Anstelle eines Gradientenverfahren sind jedoch auch andere Algorithmen denkbar, beispielsweise in denen die einzelnen Antriebe jeweils nacheinander solange angesteuert werden, bis für jede einzelne Richtungsbewegung das Maximum an Lichtleistung erreicht wird und diese Schritte mehrfach nacheinander wiederholt werden, bis das absolute Maximum an detektierter Lichtleistung erreicht ist.

## Patentansprüche

1. Verfahren zur Justierung einer Lampe (5, 105) relativ zum Beleuchtungsstrahlengang (19, 11) eines Mikroskops ohne Strahlhomogenisierer im Beleuchtungsstrahlengang, wobei die integrale Lichtleistung hinter der Pupillenebene (18) des Mikroskopobjektivs oder hinter der Pupillenebene (112) des Beleuchtungsstrahlenganges mit einem Detektor (16, 116) gemessen wird und der Lampenkörper (105, 115) relativ zum Beleuchtungsstrahlengang (19, 119) so justiert wird, daß die mit dem Detektor detektierte Lichtleistung maximal ist.

2. Verfahren nach Anspruch 1, wobei die Justierung der Lampe motorisch softwaregesteuert erfolgt.

3. Verfahren nach Anspruch 2, wobei von einem Auswerterechner (22, 122) die Motoren (6, 7, 20; 106, 107, 120) für die Bewegung der Lampe angesteuert werden, bis ein Maximum der am Detektor (16, 116) detektierten Lichtleistung erreicht ist.

4. Verfahren nach Anspruch 3, wobei zum Auffinden des Maximums der Lichtleistung ein Gradientenverfahren angewendet wird.

5. Mikroskop mit einem Beleuchtungsstrahlengang (19, 119) ohne Strahlhomogenisierer, motorischen Antrieben (6, 7, 20; 106, 107, 120) zur Justierung einer Lampe (5, 105) relativ zum Beleuchtungsstrahlengang und mit einem Auswerte- und Steuerrechner (22, 122), der die motorischen Antriebe derart nacheinander ansteuert, bis mit einem hinter der Pupillenebene des Beleuchtungsstrahlenganges oder des Mikroskopobjektivs angeordneten Detektor (16, 116) ein Maximum an integraler Lichtleistung gemessen wird.

6. Mikroskop nach Anspruch 5, wobei ein Objekttisch (2) vorgesehen ist und der Detektor (16) im Objekttisch (2) integriert ist.

7. Mikroskop nach Anspruch 5, wobei der Detektor (116) im Beleuchtungsstrahlengang integriert ist.

8. Mikroskop nach einem der Ansprüche 5 - 7, wobei eine entlang der optischen Achse (19, 119) motorisch verschiebbare Kollektoroptik(9, 109) vorgesehen ist.

9. Mikroskop nach einem der Ansprüche 5 - 8, wobei der Auswerterechner (22, 122) zum Auffinden der maximalen Lichtleistung ein Gradientenverfahren anwendet, wobei von einer Ausgangsstellung der maximale Gradient der Lichtleistung in Abhängigkeit von einer Positionsveränderung der Lampe und/oder der Kollektoroptik ermittelt wird und die Lampe (5, 105) und/oder die Kollektoroptik (9, 109) in Richtung des maximalen Gradienten der integralen Lichtleistung verstellt wird.
